**Europäisches Patentamt**

**European Patent Office**

**Office européen des brevets**

(11) Veröffentlichungsnummer: **0 186 779**
**A2**

## (12) EUROPÄISCHE PATENTANMELDUNG

(21) Anmeldenummer: 85114915.3

(22) Anmeldetag: 25.11.85

(51) Int. Cl.⁴: **G 01 D 5/34, G 01 K 1/02**

(30) Priorität: 20.12.84 DD 271196

(43) Veröffentlichungstag der Anmeldung: 09.07.86
Patentblatt 86/28

(84) Benannte Vertragsstaaten: **BE CH DE FR GB IT LI**

(71) Anmelder: **VEB Forschung und Entwicklung,
Zeulenrodaer Strasse 42 Postfach 170, DDR-6600 Greiz
(DD)**

(72) Erfinder: **Müller, Claus, Dipl.-Ing., Poetenweg 29,
DDR-7022 Leipzig (DD)**
Erfinder: **Rahm, Norbert, Wilhelm Pieck-Allee 17/0403,
DDR-7060 Leipzig (DD)**
Erfinder: **Weisse, Gerhard, Triftweg 20,
DDR-7030 Leipzig (DD)**

(74) Vertreter: **Patentanwälte Beetz sen. - Beetz jun. Timpe -
Siegfried - Schmitt-Fumian, Steinsdorfstrasse 10,
D-8000 München 22 (DE)**

(54) Verfahren und Vorrichtung zum Erfassen von Messwerten physikalischer Grössen.

(57) Die Erfindung betrifft ein Verfahren und eine Vorrichtung zur Durchführung des Verfahrens zur Meßwerterfassung physikalischer Größen, insbesondere für Temperatur oder Feuchte bei kontinuierlich ablaufenden Prozessen in unzugänglichen Prozeßräumen (1), wobei die Meßbereitschaft der mobilen Meßwerterfassungsvorrichtung (4) erst beim Auflegen auf das Prozeßgut (2) beginnt und die beim Eintritt in den Prozeßraum die physikalischen Größen erfaßt.

Die Vorrichtung zur Durchführung des Verfahrens umfaßt das Gehäuse (7) der mobilen Meßwerterfassungsvorrichtung (4), das aus einer doppelwandigen Ummantelung (8) mit dazwischen eingebetteten Dämmstoff (9) besteht, und im vorderen angeschrägten Teil des Gehäuses (7) angeordnete Stößel (10 und 15) und Lichtleitkabel (16).

An den Aus- und Eintrittsöffnungen des Lichtleitkabels (16) sind ein optoelektronischer Sender (17) und ein optoelektronischer Empfänger (18) innerhalb der aus dem Gehäuse (7) herausnehmbaren elektronischen Meßeinrichtung (20) angeordnet.

Der aus dem Gehäuse (7) herausragende Sensor (19), der die physikalische Größe in eine elektrische Größe umwandelt, ist bis zur Meßeinrichtung (20) geführt. Die Meßeinrichtung (20), die mit einem Speicherausgang ausgerüstet ist, wird über einen Steckverbinder mit den zur Auswertung der Meßergebnisse angeordneten Sekundärgeräten verbunden.

ACTORUM AG

Verfahren und Vorrichtung zum Erfassen von Meßwerten physikalischer Größen

Die Erfindung betrifft ein Verfahren und eine Vorrichtung zur Durchführung des Verfahrens zur Meßwerterfassung physikalischer Größen, insbesondere für Temperatur oder Feuchte bei kontinuierlich ablaufenden Prozessen in unzugänglichen Prozeßräumen, deren stationäre Prozeßzustände durch eine Meßwerterfassung nicht beeinflußt werden sollen und dürfen. Dabei kann es sich fallweise um eine Meßwerterfassung des Prozeßraumes an sich, der Wirkung der physikalischen Größe auf das den Prozeßraum kontinuierlich durchlaufende Gut oder dessen Grenzschichten handeln.

Beispiele für Anwendungsgebiete sind insbesondere:

- Spann-Trocken-und-Fixiermaschinen in der Textilindustrie,
- Kaolintrockner in der Keramikindustrie,
- Schwellölbäder in der Elektronikindustrie.

Es ist bekannt, daß bestimmten Gütern, z. B. textilen Flächengebilden, feuchten Rohstoffmassen, Holz usw., durch gezielte chemische und physikalische Beeinflussung in vorgegebenen Grenzen und Zeitabläufen positive Eigenschaften verliehen werden können, indem diese Güter kontinuierlich einen Prozeßraum durchlaufen.

Um Prozeßdaten zu erhalten, ist es oft erforderlich, diese im stationären Zustand zu erfassen. Bekannt sind bisher nur Verfahren, bei denen eine physikalische Größe, z. B.

die Temperatur, mit Hilfe eines Meßfühlers, einer Schleifleitung und einer außerhalb des Prozeßraumes befindlichen elektronische Auswerteeinrichtung gemessen wird.
Diese Anordnung ist sehr störanfällig, kann zu größeren
Beschädigungen des Gutes sowie des Prozeßraumes selbst
führen und ist Arbeitskräfteintensiv.

Bekannt ist eine Vorrichtung zum Messen und Auswerten
von Temperaturverläufen (DE-AS 24 56 663), die insbesondere zur Ermittlung des Sterilisationswertes von
Konserven verwendet wird. Dabei wird das Meßgut, wie
z. B. eine Bierflasche, eine Konservendose u. dgl., dem
Produktionsfluß entnommen und mit der Vorrichtung
versehen. Nach Einschaltung der Vorrichtung wird
das Meßgut zusammen mit der Vorrichtung wieder dem
Produktionsfluß zugeführt.

Eine derartige Vorrichtung eignet sich jedoch nicht für
zusammenhängende, großflächige Prozeßgüter, die
mehrere Prozeßräume in unmittelbarer Folge relativ
schnell durchlaufen (5... 100 m/min).

Ebenfalls nur für langsam ablaufende Prozesse, wobei
ein Teil des Prozeßgutes zeitweise entnommen werden muß,
ist bereits eine flexible Meßeinrichtung DE-OS
32 24 502 A 1) vorgeschlagen worden.

Ziel der Erfindung ist es, ein Verfahren und eine mobile
Vorrichtung zur Meßwerterfassung zu schaffen, deren
Meßbereitschaft beim Auflegen auf das Prozeßgut beginnt
und die beim Eintritt in den Prozeßraum die physikalischen Größen eines relativ schnell ablaufenden kontinuier-

-3-

lichen Prozesses (5... 10 m/min) in unzugänglichen Prozeßräumen erfaßt.

Der Erfindung liegt die Aufgabe zugrunde, ein Verfahren und eine Vorrichtung zur Durchführung des Verfahrens zu schaffen, mit der es möglich ist, physikalische Größen in unzugänglichen Prozeßräumen bei relativ schnell ablaufenden kontinuierlichen Prozessen aufzunehmen.

Erfindungsgemäß wird die Aufgabe dadurch gelöst, daß entsprechend der Länge des unzugänglichen Prozeßraumes, der Durchlaufgeschwindigkeit des Prozeßgutes und der Speicherkapazität der mobilen Meßwerterfassungsvorrichtung vor deren Inbetriebnahme über den Programmschalter die Teilerverhältnisse im Steuerteil programmiert werden. Anschließend wird eine elektronische Meßeinrichtung in ein Gehäuse eingelegt, wodurch ein im Gehäuse befindlicher Stößel nach oben gedrückt wird. Mit dem Start der Meßbereitschaft wird ausgewertet. In Höhe der Einlauföffnung wird ein weiterer Stößel zur Auslösung eines weiteren Signals niedergedrückt. Die vom Sensor aufgenommene und in eine elektrische Größe umgewandelte physikalische Größe wird über einen Verstärkungs- und Normierungsteil mit einer Analog-Digital-Wandler als digitaler Wert in einen Speicher eingeschrieben. Gleichzeitig werden Informationen vom Verstärkungs- und Normierungsteil und vom Analog-Digital-Wandler über das Steuerteil an den Speicher weitergegeben. Nach Verlassen des unzugänglichen Prozeßraumes wird das Gehäuse vom Prozeßgut abgehoben, die elektronische Meßeinrichtung entnommen und diese zur Ausertung der darin gespeicherten Informationen mit einem Mikrorechner und/oder einer elektronischen Anzeigeeinrichtung über einen Steckverbinder verbunden.

Die Vorrichtung zur Durchführung des Verfahrens umfaßt
das Gehäuse der mobilen Meßwerterfassungsvorrichtung,
das aus einer doppelwandigen Ummantelung mit dazwischen
eingebetteten Dämmstoff besteht. Im vorderen angeschrägten Teil dieses Gehäuses befinden sich die
Einrichtungen zur Herstellung der Meßbereitschaft und
zum Start der Meßwertaufnahme, wie die im Ruhestand
nicht den Signalfluß unterbrechende Stößel, Wippe,
Lichtleitkabel oder andere bekannte Signalwege.
An den Aus- und Eintrittsöffnungen des Lichtleitkabels
sind optoelektronische Sender und optoelektronische
Empfänger innerhalb der aus dem Gehäuse herausnehmbaren
elektronischen Meßeinrichtung angeordnet. Der aus
dem Gehäuse herausragende Sensor ist bis zur elektronischen Meßeinrichtung geführt und mit einem Verstärkungs-
und Normierungsteil mit nachgeschaltetem Analog-Digital-
Wandler zusammengeschaltet. Vom Verstärkungs- und
Normierungsteil, über den Analog-Digital-Wandler,
eine Bereitschaftseinheit, einen Programmierschalter
und eine Starteinheit ist ein weiterer Signalweg zu
einem Steuerteil geführt. Der Speicher ist mit den zur
Auswertung der Meßergebnisse angeordneten Sekundärgeräten durch Steckverbinder verbunden. Eine batteriebetriebene Stromversorgung ist mit einer Bereitschaftseinheit, der Starteinheit, dem Verstärkungs- und
Normierungsteil, dem Speicher, dem Analog-Digital-
Wandler und dem Steuerteil zusammengeschaltet.

Mit diesem Verfahren und dieser Vorrichtung ist es
möglich, in unzugänglichen Prozeßräumen physikalische

-5-

Größen exakt zu erfassen und abzuspeichern. Nach Auslesen der vorliegenden Meßwerte kann der technologische
Prozeß optimiert werden (z. B. energetisch, verfahrenstechnisch, qualitätsverbessernd). Durch die
einfache Anwendung ist es möglich, daß der Betreiber
die Kontrolle der Prozeßdaten nach Bedarf durchführen kann.

Die Erfindung soll nachstehend anhand eines Ausführungsbeispieles näher erläutert werden.

In der Zeichnung zeigen:

Fig. 1: Prinzipskizze der Maschinenanordnung zur
        Veredlung von textilen Flächengebilden

Fig. 2: Prinzipskizze des Aufbaus einer mobilen Meßwerterfassungsvorrichtung in Seitenansicht
        und Draufsicht

Fig. 3: Blockschaltbild der mobilen Meßwerterfassungsvorrichtung

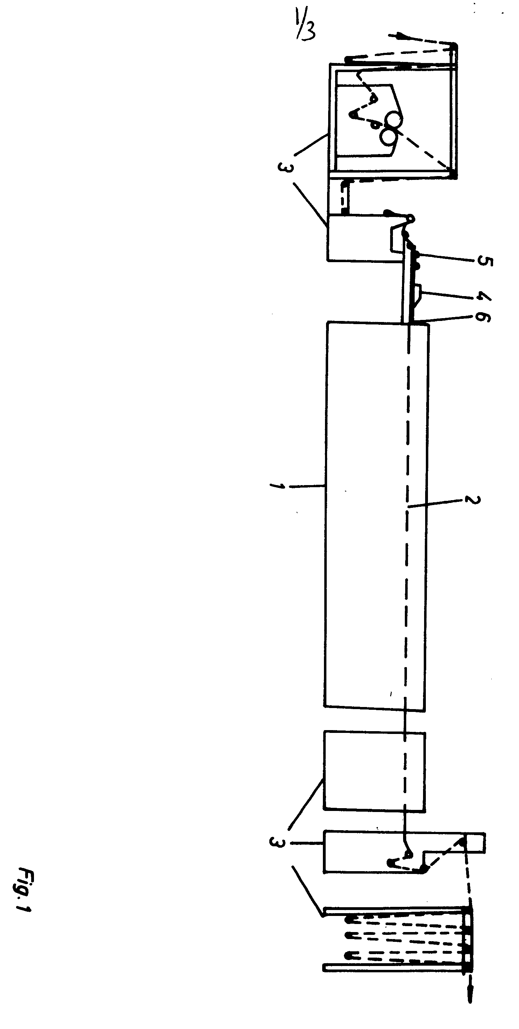

In Fig. 1 ist als Beispiel für einen zu untersuchenden
unzugänglichen Prozeßraum 1 eine Spann-Trocken-Fixiermaschine mit vor- und nachgestellten Prozeßräumen 3, die
in der Textilindustrie zur Trocknung und Veredlung
von textilen Flächengebilden als Prozeßgut 2 (Stoffbahn)
eingesetzt wird, dargestellt. Beim Trocknungs- bzw.
Thermofixierprozeß durchläuft die Stoffbahn in unmittelbarer Folge diese Prozeßräume 1 und 3. Im unzugänglichen
Prozeßraum 1 findet durch Wärmebehandlung ein sehr ener-

-6-

gieintensiver Prozeß statt, wobei es notwendig ist, eine genaue Kenntnis über die im unzugänglichen Prozeßraum 1 wirkenden Temperaturen zu erhalten. Dies beinhaltet Temperaturmessungen im Prozeßgut 2 selbst, in der sich aufbauenden Grenzschicht oder im unzugänglichen Prozeßraum 1 (Wirkung von Heizregistern und Umlüftern, Störungen durch Flusenbildung, Falschlufteinbrüche im Ein- und Auslaufbereich usw.). Bei Stillstand des Prozeßgutes 2 werden Umlüfter und Heizregister abgeschaltet. Nach Neuanlauf werden diese zugeschaltet. Erst nach einer gewissen Anlaufzeit stellt sich im unzugänglichen Prozeßraum 1 ein stationärer Zustand ein. Dieser ist erforderlich, um aussagekräftige Prozeßdaten zu erhalten. Bedingt durch die Anordnung der aufeinanderfolgenden Prozeßräume 1 und 3 ist das Auflegen der mobilen Meßwerterfassungsvorrichtung 4 nur im Aufnadelungsbereich 5 der Spann-Trocken-Fixiermaschine möglich. Da dieser Bereich schwer zugänglich ist, wird, um einen vorzeitigen Start beim Hantieren mit der mobilen Meßwerterfassungsvorrichtung 4 auszuschließen, diese erst beim Auflegen auf das Prozeßgut 2 in Meßbereitschaft versetzt und durch die Einlauföffnung 6 die Meßwertaufnahme gestartet.

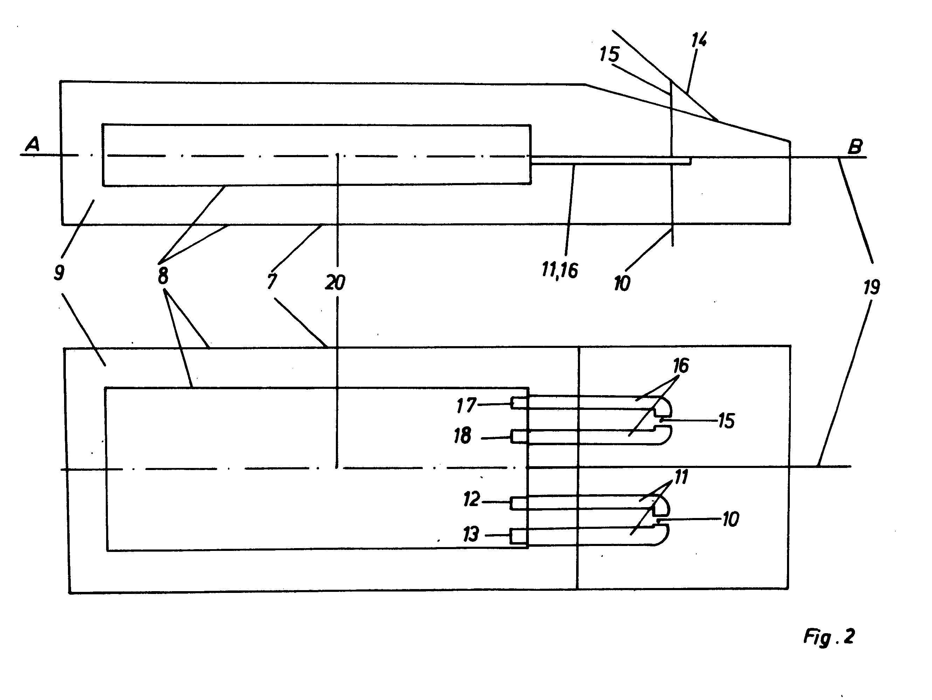

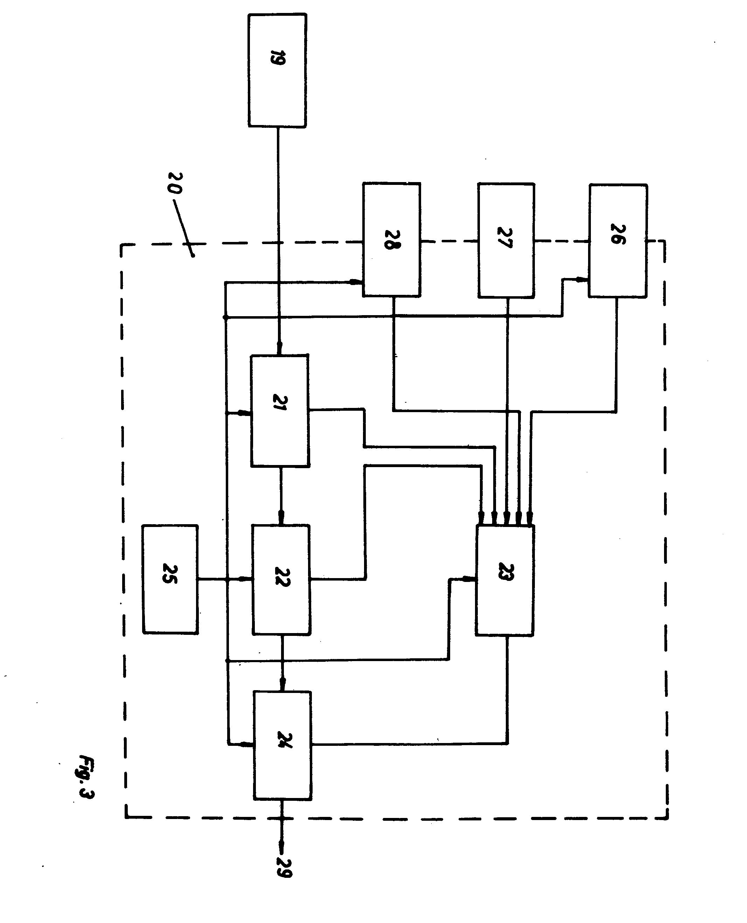

Der Aufbau der mobilen Meßwerterfassungsvorrichtung 4 wird in den Figuren 2 und 3 erläutert.

Das Gehäuse 7 der mobilen Meßwerterfassungsvorrichtung 4 besteht aus einer doppelwandigen Ummantelung 8, die mit Dämmstoff 9 gegen thermische und chemische Einflüsse ausgefüllt ist. Im angeschrägten vorderen Teil des Gehäuses 7 befinden sich die Einrichtungen zur Herstellung

-7-

der Meßbereitschaft und zum Start der Meßwertaufnahme. Die Einrichtungen bestehen aus den Stößeln 10 und 15, der Wippe 14 und den Lichtleitkabeln 11 und 16. Die Stößel 10 und 15 sind so angebracht, daß sie im Ruhestand den Lichtfluß nicht unterbrechen. An den Aus- und Eintrittsöffnungen der Lichtleitkabel 11 und 16 befinden sich optoelektronische Sender 12 und 17 sowie optoelektronische Empfänger 13 und 18, die in der elektronischen Meßeinrichtung 20 angeordnet sind. Die elektronische Meßeinrichtung 20 ist so gestaltet, daß sie aus dem Gehäuse 7 herausgenommen werden kann. Der zur Meßwertaufnahme dienende Sensor 19 ist ein Mantelthermoelement, das aus dem Gehäuse 7 herausragt und durch die doppelwandige Ummantelung 8, die den Dämmstoff 9 enthält, bis zur elektronischen Meßeinrichtung 20 geführt wird. Die elektronische Meßeinrichtung 20 wird durch die innere Ummantelung 8 geschützt. Der Sensor 19 ist in bekannter Weise mit einem Verstärkungs- und Normierungsteil 21 zusammengeschaltet. Darin befinden sich elektronische Schaltungsteile zur Kompensation der Gegenlötstelle, zur Signalverstärkung und zur Anpassung an den Eingang des Analog-Digital-Wandlers 22, der diesen nachgeschaltet ist. Vom Verstärkungs- und Normierungsteil 21 wird ein weiterer Signalweg zum Steuerteil 23 geführt. Das Steuerteil 23 beinhaltet einen freilaufenden Taktgenerator, eine sich daran anschließende Teilerkette, einen Adreßzähler und Logikschaltungen zur Zyklussteuerung der Einschreib- und Auslesevorgänge entsprechend bekannter Applikationen. Außerdem ist das Steuerteil 23 mit einem Programmierschalter 27 sowie der Starteinheit 28 und der Bereitschaftseinheit 26 verbunden.

-8-

Die Bereitschaftseinheit 26 besteht aus dem optoelektronischen Sender 12 und dem Empfänger 13 sowie dem Lichtleitkabel 11 und dem Stößel 10. Die Starteinheit wird aus den optoelektronischen Sender 17 und dem Empfänger 18, dem Lichtleitkabel 16 und der Wippe 14 mit dem Stößel 15 gebildet. Dem Steuerteil 23 ist ein Speicher 24 nachgeschaltet, der ebenfalls mit dem Analog-Digital-Wandler 22 verbunden ist. Die Verbindung zwischen dem Speicher 24 und den Sekundärgeräten zum Auswerten der Meßergebnisse wird über einen Steckverbinder 29 hergestellt. Zur Stromversorgung 25 werden gasdichte Nickel-Cadmium-Akkumulatoren verwendet, aus denen durch Gleichspannungswandlung und Stabilisierung die erforderlichen Betriebsspannungen für die elektronischen Schaltungsteile gewonnen werden. Sie ist deshalb mit der Bereitschaftseinheit 26, der Starteinheit 28, dem Verstärkungs- und Normierungsteil 21, dem Analog-Digital-Wandler 22, dem Speicher 24 und dem Steuerteil 23 verbunden. Von der Inbetriebnahme wird die mobile Meßwerterfassungsvorrichtung 4 durch eine Programmierung vorbereitet. Dies erfolgt durch eine entsprechende Einstellung am Programmierschalter 27. Die Programmierung des Teilerverhältnisses im Steuerteil 23 erfolgt entsprechend der Länge des unzugänglichen Prozeßraumes 1, der Durchlaufgeschwindigkeit des Prozeßgutes 2 und der Speicherkapazität der mobilen Meßwerterfassungsvorrichtung 4. Danach wird die elektronische Meßeinrichtung 20 in das Gehäuse 7 eingelegt, dieses verschlossen und die mobile Meßwerterfassungsvorrichtung 4 auf das Prozeßgut 2 im Aufnadelungsbereich 5 der Spann-Trocken-und-Fixiermaschine aufgelegt. Durch das Auflegen wird der Stößel 10 nach oben gedrückt und unterbricht dabei einen optischen Strahlungsweg (Signalfluß), der durch das Lichtleitkabel 11 geführt wird. Als Folge davon gibt der optoelektronische Empfänger 13, der ein Teil der Bereitschaftseinheit 26 ist, an das Steuerteil 23 einen Bereitschaftsbefehl und die elektronische Meßeinrichtung 20 wird in Meßbereitschaft versetzt. Gemeinsam mit dem Prozeßgut 2 läuft die mobile Meßwerterfassungsvorrichtung 4 in den unzugänglichen Prozeßraum 1 ein. Dabei wird der Stößel 15 mit der Wippe 14 in Höhe der Einlauföffnung 6 niedergedrückt und ein zweiter optischer Strahlungsweg (Signalfluß) im Lichtleitkabel 16 unterbrochen. Der optoelektronische Empfänger 18, der ein Teil der Starteinheit 28 ist, löst im Steuerteil 23 einen einmaligen Startimpuls aus, wodurch der Meßvorgang beginnt. Die vom Sensor 19 aufgenommene und von diesem in eine entsprechende elektrische Größe (Spannung) umgewandelte physikalische Größe (Temperatur) wird dem Verstärkungs- und Normierungsteil 21 zugeführt. Danach erfolgt im Analog-Digital-Wandler 22 eine Umwandlung der Information. Die digitalen Werte werden in den Speicher 24 eingeschrieben. Vom Verstärkungs- und Normierungsteil 21 und vom Analog-Digital-Wandler 22 werden dabei auch an das Steuerteil 23 Informationen weitergeleitet, die zur Steuerung des Adreßzählers für den Speicher 24 dienen. Ist der Vorrat an Speicherplätzen im Speicher 24 erschöpft, wird die Meßwertaufnahme gestoppt. Nach dem Verlassen des unzugänglichen Prozeßraumes 1 wird die mobile Meßwerterfassungsvorrichtung 4 vom Prozeßgut 2 abgenommen. Danach wird das Gehäuse 7 geöffnet und die elektronische Meßeinrichtung 20 entnommen. Über den Steckverbinder 29 werden die digital abgespeicherten

-10-

Informationen zur Auswertung in einen Mikrorechner und/oder in eine elektronische Anzeigeeinrichtung übernommen.

Die Einrichtungen zur Herstellung der Meßbereitschaft und zum Start der Meßwerterfassungsvorrichtung 4, die vorzugsweise aus optischen, mechanischen oder induktiv bestätigten Kontakten bzw. Kombinationen derselben bestehen, sind am bzw. im Gehäuse 7 so angeordnet, daß ein Schutz vor äußeren Einflüssen gewährleistet ist. Der Vorteil der mobilen Meßwerterfassungsvorrichtung 4 besteht darin, daß bei relativ schnell ablaufenden Prozessen in vielen unzugänglichen Prozeßräumen physikalische Größen (z. B. Temperatur, Druck, Feuchte) ohne Beeinflussung des stationären Prozeßzustandes erfaßt werden können. Dabei ist es nicht erforderlich, den ablaufenden technologischen Prozeß beim Auflegen der mobilen Meßwerterfassungsvorrichtung zu unterbrechen. Außerdem kann bei zusammenhängenden, großflächigen Prozeßgütern (z. B. Textil- und dgl. Bahnen), die mehrere Prozeßräume in unmittelbarer Folge schnell durchlaufen, nur eine mobile Meßwerterfassungsvorrichtung eingesetzt werden, da es in diesen Fällen nicht möglich ist, Teile des Prozeßgutes zu entnehmen.

Ein weiterer Vorteil der mobilen Meßwerterfassungsvorrichtung 4 besteht darin, daß durch ein definiertes Einschalten beim Einlaufen in den unzugänglichen Prozeßraum die Meßwerte zuordnen- oder vergleichbar werden. Durch Verwendung der mobilen Meßwerterfassungsvorrichtung wird es möglich, energetische, verfahrenstechnische und qualitätsverbessernde Optimierungen durchzuführen. Bei einer Spann-Trocken-und-Fixiermaschine können z. B. Störungen im Temperaturregime der Maschine oder textilartenbedingte Temperaturunter- oder -überschreitungen, die eine Qualitätsminderung zur Folge hätten, festgestellt werden. Danach müssen Veränderungen an der Sollwerteinstellung des Temperaturreglers vorgenommen werden und die Maschine bzw. das technologische Verfahren arbeitet wieder optimal.

Die mobile Meßwerterfassungsvorrichtung ist gegen die im Prozeßraum herrschenden physikalischen Zustände geschützt. Zur thermischen Isolation werden Dämmstoffe eingesetzt, die den jeweiligen Proezßbedingungen angepaßt sind. Hierzu eignen sich poröse Stoffe, z. B. Schaumglas.

Zum Schutz vor aggressiven chemischen Einflüssen erfolgt eine Unterbringung der elektronischen Meßeinrichtung 20 in einem chemisch resistenten Gehäuse (z. B. Edelstahl, PTFE), wobei eine Kombination beider Schutzmaßnahmen möglich ist.

Aufstellung der verwendeten Bezugszeichen

| | |
|---|---|
| 1 | unzugänglicher Prozeßraum |
| 2 | Prozeßgut |
| 3 | vor- und nachgestellte Prozeßräume |
| 4 | mobile Meßwerterfassungsvorrichtung |
| 5 | Aufnadelungsbereich |
| 6 | Einlauföffnung |
| 7 | Gehäuse |
| 8 | Ummantelung |
| 9 | Dämmstoff |
| 10 | Stößel |
| 11 | Lichtleitkabel |
| 12 | optoelektronischer Sender |
| 13 | optoelektronischer Empfänger |
| 14 | Wippe |
| 15 | Stößel |
| 16 | Lichtleitkabel |
| 17 | optoelektronischer Sender |
| 18 | optoelektronischer Empfänger |
| 19 | Sensor |
| 20 | elektronische Meßeinrichtung |
| 21 | Verstärkungs- und Normierungsteil |
| 22 | Analog-Digital-Wandler |
| 23 | Steuerteil |
| 24 | Speicher |
| 25 | Stromversorgung |
| 26 | Bereitschaftseinheit |
| 27 | Programmierschalter |
| 28 | Starteinheit |
| 29 | Steckverbinder |

I

## Patentansprüche

1. Verfahren zum Erfassen von Meßwerten physikalischer Größen bei kontinuierlich ablaufenden Prozessen in unzugänglichen Prozeßräumen, dadurch gekennzeichnet, daß entsprechend der Länge des unzugänglichen Prozeßraumes, der Durchlaufgeschwindigkeit des Prozeßgutes und der Speicherkapazität der mobilen Meßwerterfassungsvorrichtung vor deren Inbetriebnahme die Teilerverhältnisse im Steuerteil über den Programmschalter programmiert werden, und daß anschließend eine elektronsiche Meßeinrichtung in ein Gehäuse eingelegt, verschlossen und auf das sich bewegende Prozeßgut aufgelegt, ein im Gehäuse befindlicher Stößel nach oben gedrückt, ein Signalfluß zum Start der Meßbereitschaft ausgewertet, ein weiterer Stößel zur Auslösung eines weiteren Signalflusses in Höhe der Einlauföffnung niedergedrückt wird und daß die vom Sensor aufgenommene und in eine elektrische Größe umgewandelte physikalische Größe über einen Verstärkungs- und Normierungsteil und einen Analog-Digital-Wandler als digitaler Wert in einem Speicher eingeschrieben und Informationen vom Verstärkungs- und Normierungsteil und vom Analog-Digital-Wandler über das Steuerteil an den Speicher weitergegeben werden, und daß nach Verlassen des unzugänglichen Prozeßraumes das Gehäuse vom Prozeßgut abgehoben, die elektronische Meßeinrichtung entnommen und diese zur Auswertung der darin gespeicherten Informationen mit einem Mikrorechner und/oder einer elektronischen Anzeigeeinrichtung über einen Steckverbinder verbunden wird.

2. Vorrichtung zur Durchführung des Verfahrens nach Anspruch 1, dadurch gekennzeichnet, daß das Gehäuse (7) der mobilen Meßwerterfassungsvorrichtung (4) aus einer doppelwandigen Ummantelung (8) mit Dämmstoff (9) besteht, und daß sich in einem vorderen angeschrägten Teil des Gehäuses (7) die Einrichtungen zur Herstellung der Meßbereitschaft und zum Start der Meßwertaufnahme, wie die im Ruhezustand nicht den Signalfluß unterbrechende Stößel (10 und 15), Wippe (14), Lichtleitkabel (11 und 16) oder andere bekannte Signalwege, befinden, wobei an den Aus- und Eintrittsöffnungen der Lichtleitkabel (11 und 16) optoelektronische Sender (12 und 17) und optoelektronische Empfänger (13 und 18) innerhalb der aus dem Gehäuse (7) herausnehmbaren elektronische Meßeinrichtung (20) angeordnet sind, und daß der aus dem Gehäuse (7) herausragenden Sensor (19) bis zur elektronischem Meßeinrichtung (20) geführt, mit einem Verstärkungs- und Normierungsteil (21) mit nachgeschaltetem Analog-Digital-Wandler (22) und einem Speicher (24) zusammengeschaltet ist, und daß vom Verstärkungs- und Normierungsteil (21) über den Analog-Digital-Wandler (22) eine Bereitschaftseinheit (26), einen Programmierschalter (27) und eine Starteinheit (28) ein weiterer Signalweg zu einem Steuerteil (23) geführt ist, wobei der Speicher (24) mit den zur Auswertung der Meßergebnisse angeordneten Sekundärgeräten durch einen Steckverbinder (29) verbunden und eine batteriebetriebene Stromversorgung (25) mit einer Bereitschaftseinheit (26) der Starteinheit (28), dem Verstärkungs- und

3

Normierungsteil (21), dem Speicher (24), dem
Analog-Digital-Wandler (22) und dem Steuerteil
(23) zusammengeschaltet ist.

- Hierzu 3 Seiten Zeichnungen -

0186779

1/3

5  4  6

2

3

1

3

*Fig. 1*

0186779

Fig. 2

0186779

Fig. 3